# EUROPEAN PATENT APPLICATION

(11) **EP 2 196 639 A1**
(43) Date of publication of application: **16.06.2010**
(21) Application number: 09173757.7
(22) Date of filing: 22.10.2009
(51) Int. Cl.: F01M 1/08, F01M 1/14, F01M 1/16, F16N 25/02

(54) **A cylinder oil dosage pump, a cylinder lubricating system, and an internal combustion engine**

(30) Priority: 12.12.2008 EP 08171461
(71) Applicant: Wärtsilä Schweiz AG, 8401 Winterthur (CH)
(72) Inventor: Ptaszynski, Miroslaw, 8400, Winterthur (CH)
(74) Representative: Kluthe, Stefan

(57) **Abstract**

The invention relates to a cylinder oil dosage pump (1) for dosing a presettable amount of a cylinder lubricating oil (2) to a lubricating quill of a cylinder of an internal combustion engine, in particular a two stroke large diesel engine. The cylinder oil dosage pump (1) comprises an actuating piston (3), a dosage plunger (4), in particular only one single dosage plunger (4) being driven in the operation state by the actuating piston (3), and a delivery means (5) for delivering the lubricating oil (2) via a dosing space (6) to the lubricating quill, wherein in said dosing space (6) the dosage plunger (4) is drivable arranged so as to reciprocate in a delivery and a return stroke over a working travel along a plunger axis (7). According to the invention, the delivery means (5) is a hollow delivery means (5) of a two-part design, including a switching member (51) and a delivery member (52). The switching member (51) is movable arranged within the delivery member (52) so as to reciprocate between a filling position (5101) and a delivery position (5102), wherein in the filling position (5101) the dosing space (6) is refillable with lubrication oil (2) via a lubricating oil supply-opening (8) and in the delivery position (5102) the lubricating oil (2) is deliverable by means of the dosage plunger (4) via a quill-opening (9) to the lubricating quill. In addition, the invention relates to a cylinder lubricating arrangement and an internal combustion engine with a lubricating arrangement according to the invention.

## Description

The invention relates to a cylinder oil dosage pump for dosing a cylinder lubricating oil to a lubricating quill of a cylinder of an internal combustion engine, in particular a slow running two stroke large diesel engine, as well as to a cylinder lubricating arrangement comprising an oil dosage pump, and an internal combustion engine in accordance with the pre-characterising part of the respective independent claims.

Large diesel engines are often used as power units for ships or also in stationary operation, for example for driving large generators for the production of electrical power. Here as a rule the engines are in constant operation over a considerable period of time which makes high demands on the operating reliability and availability. For this reason, for the operators, long intervals between services, low degrees of wear and an economical use of fuel and operating materials in particular are central criteria for the operation of the machines. Among other things the running behaviour of the pistons of such large bore slowly running diesel engines is a determining factor for the length of the intervals between servicing, the availability and, via the lubricant consumption, also directly for the operating costs and thus for the economic viability. Thus the complex problems associated with the lubrication of large diesel engines are of ever-increasing importance.

In large diesel engines, however not only in these, the piston lubrication is undertaken by lubrication devices in the reciprocating piston or in the cylinder wall by which the lubricating oil is applied to the running surface of the cylinder wall in order to minimize the friction between the piston and the running surface and thus the wear of the running surface and the piston rings. Thus in the case of modern engines, such as for example Wärtsilä's RTA engines, the wear of the running surface is less than 0.05 mm for an operating time of 1000 hours. The quantity of lubricant being transported is circa 1.3 g/kWh and less and should be reduced further, not least for reasons of cost, and the wear should be minimised at the same time.

Totally different solutions are known for lubrication systems for lubricating the running surfaces, not only with regard to the actual operation of the lubrication devices themselves but also with respect to the method of lubrication. Thus lubrication devices are known in which the lubrication oil is applied through a plurality of lubricant openings, which are accommodated in the cylinder wall in the circumferential direction, to the pistons running past at the lubricant openings, with the lubricant being distributed by the piston rings not only in the circumferential direction but also in the axial direction.

To guarantee an improved distribution of the lubrication oil, i.e. in order to guarantee a more even lubricating oil film on the running surface, a lubricating system is suggested in WO 00/28194 for example, in which the lubricating oil is sprayed at high pressure by means of atomising nozzles which are housed in the cylinder walls, essentially tangentially to the cylinder wall into the scavenging air present in the combustion chamber, with the lubricating oil being atomised to small particles. In this way the atomised lubricating oil is finely distributed in the scavenging air and is thrown against the running surface of the cylinder wall by the centrifugal force of the swirl supported by the scavenging air and thus also of the lubricating oil particles finely distributed in it. In this method a considerably more even lubricating oil film is produced on the running surface than in the case of radial lubrication oil injection; a grave disadvantage of this method is however that a not inconsiderable part of the lubricating oil used is carried away with the scavenging air or is also burned during the combustion cycle. Through this an unnecessarily high lubricating oil consumption arises which has a significant negative effect on the operating costs.

In another method a plurality of lubricating nozzles are preferably accommodated in the moving piston, so that the lubricant can be applied substantially across the whole height of the running surface at any desired positions.

In this arrangement, apart from the manner in which the lubricant is applied to the running surface of the cylinder wall, the dosage of the lubricant is a central point. For this purpose, a large variety of different oil dosage pumps are known form the state of the art. In order to ensure an even oil distribution to the lubricating quills of the cylinder of the internal combustion engine, the known oil dosage pumps include an actuating piston driving a certain number of dosage plungers being attached or connected to the actuating piston. The dosage plungers are driveable arranged in a dosing space so as to reciprocate in a delivery and a return stroke over a working travel along the plunger axis. In the return stroke, a pre-settable amount of lubricating oil is filled into the dosing space on top of the plunger. On receiving an injection signal, the actuating piston starts to move and the lubricating oil is pressurized by the plungers driven by the actuating piston and the lubricating oil is supplied from each dosing space to the respective lubricating quill.

Such known cylinder oil dosage pumps as for example disclosed in CH 673 506, DE 197 43 955 B4, or EP 1 386 063 A1 which all are very complex in construction resulting in a comparably high price for the pumps.

The object of the invention is thus to suggest an improved cylinder oil dosage pump for dosing a cylinder lubricating oil which oil dosage pump is simple in construction, more reliable as the pumps known from the state of the art and, as a result, saving considerably costs. It is also an object of the invention to provide an improved cylinder lubricating arrangement comprising an improved cylinder oil dosage pump as well as an internal combustion engine having such a cylinder lubricating arrangement.

The subject-matter of the invention which satisfies these objects are characterised by the features of the respective independent claims.

The respective dependent claims relate to particularly advantageous embodiments of the invention.

The invention thus relates to a cylinder oil dosage pump for dosing a pre-settable amount of a cylinder lubricating oil to a lubricating quill of a cylinder of an internal combustion engine, in particular a two stroke large diesel engine. The cylinder oil dosage pump comprises an actuating piston, a dosage plunger, in particular only one single dosage plunger being driven in the operation state by the actuating piston, and a delivery means for delivering the lubricating oil via a dosing space to the lubricating quill, wherein in said dosing space the dosage plunger is drivable arranged so as to reciprocate in a delivery and a return stroke over a working travel along a plunger axis. According to the invention, the delivery means is a hollow delivery means of a two-part design, including a switching member and a delivery member. The switching member is movable arranged within the delivery member so as to reciprocate between a filling position and a delivery position, wherein in the filling position the dosing space is refillable with lubrication oil via a lubricating oil supply-opening and in the delivery position the lubricating oil is deliverable by means of the dosage plunger via a quill-opening to the lubricating quill.

In a special embodiment which is very important in practice, only one single dosage plunger is connected to the actuating piston. As a result, the oil dosage pump in accordance with the present invention is simple in construction, more reliable as the pumps known from the state of the art and, as a result, saves considerably costs.

Regarding a preferred embodiment, a return spring is provided at the actuating piston in order to return the actuating piston in the operating state after a delivery stroke back into a rest position.

Preferably, at a spring-pressure-face of the switching member a switching spring is provided in order to return the switching member in the operating state from the filling position back into the delivery position.

Thereby, at the switching member opposite to the spring-pressure-face a filling-pressure-face can be provided, said filling-pressure-face having an effective area which is greater than an area of the spring-pressure-face, wherein at the switching member opposite to the filling-pressure-face a delivery-pressure-face is preferably provided.

Regarding a further special embodiment of the present invention, a total area of the spring-pressure-face and the delivery-pressure-face equals to the effective area of the filling-pressure face.

Preferably a plurality, in particular four supply-openings are provided, wherein in another embodiment the supply-opening is an annular space.

In addition a plurality, in particular four quill-openings are provided, wherein in a special embodiment oft the present invention the quill-opening is an annular space.

Furthermore, the invention is related to a cylinder lubricating arrangement comprising a cylinder oil dosage pump as described above.

Preferably, a pressurizeable oil supply is provided which is connected to the supply opening of the cylinder oil dosage pump providing the cylinder oil under a pre-settable pressure.

Regarding a preferred embodiment which is very important in practice, the pressurizeable oil supply is a common rail accumulator.

The quill-opening can be advantageously connected to a common oil-space so that the lubricating oil can be fed from the quill-opening via the common oil-space to an oil distributor for even oil distribution of the lubricating quill of the cylinder of the internal combustion engine.

The invention relates also to an internal combustion engine, in particular two-stroke large diesel engine comprising a cylinder oil dosage pump or comprising a cylinder lubricating arrangement as described in the present description

The invention will be described more closely with the help of the schematic drawings, which show:
- Fig. 1: a cylinder oil dosage pump according to the invention;
- Fig. 2: a delivery means with a switching member in the filling position;
- Fig. 3: a delivery means with a switching member in the delivery position.

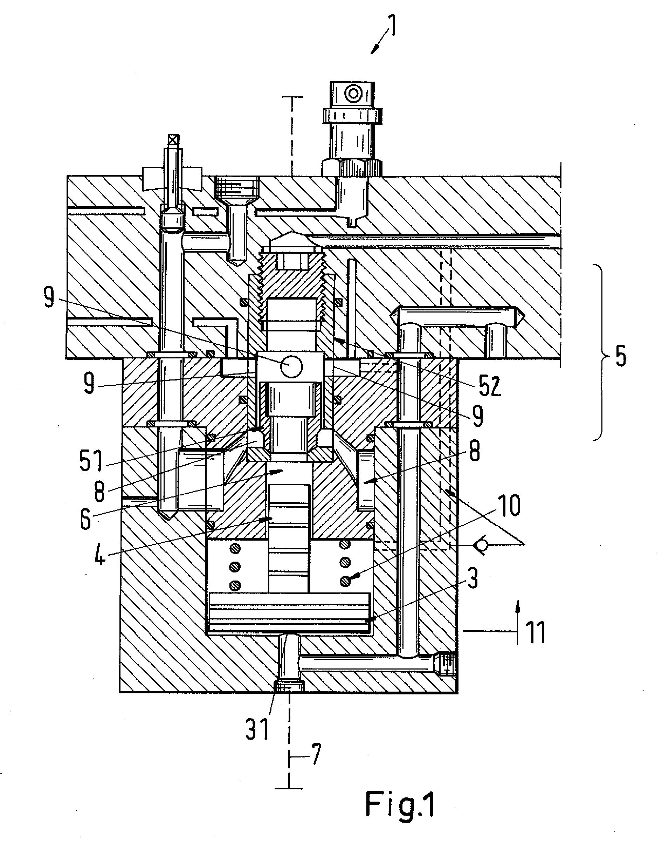

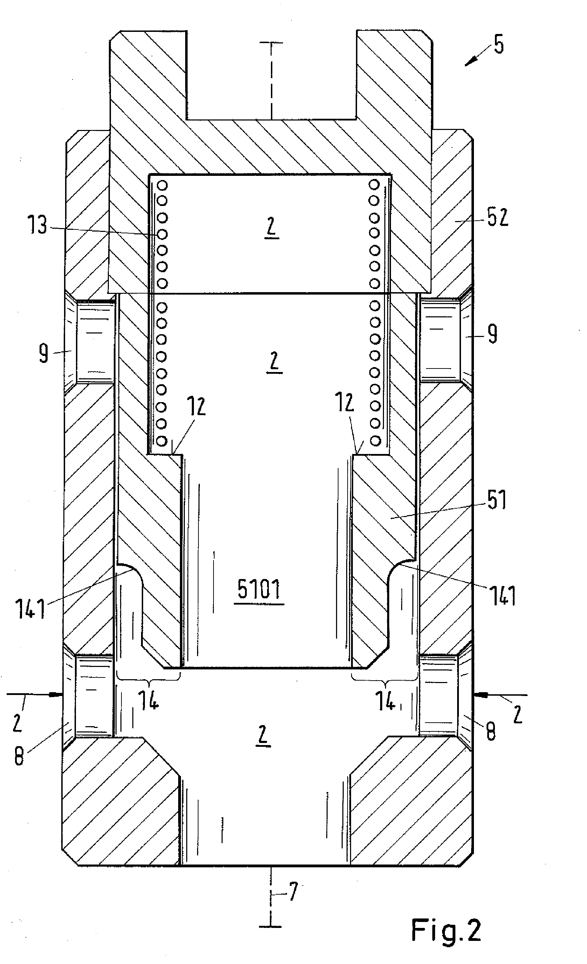

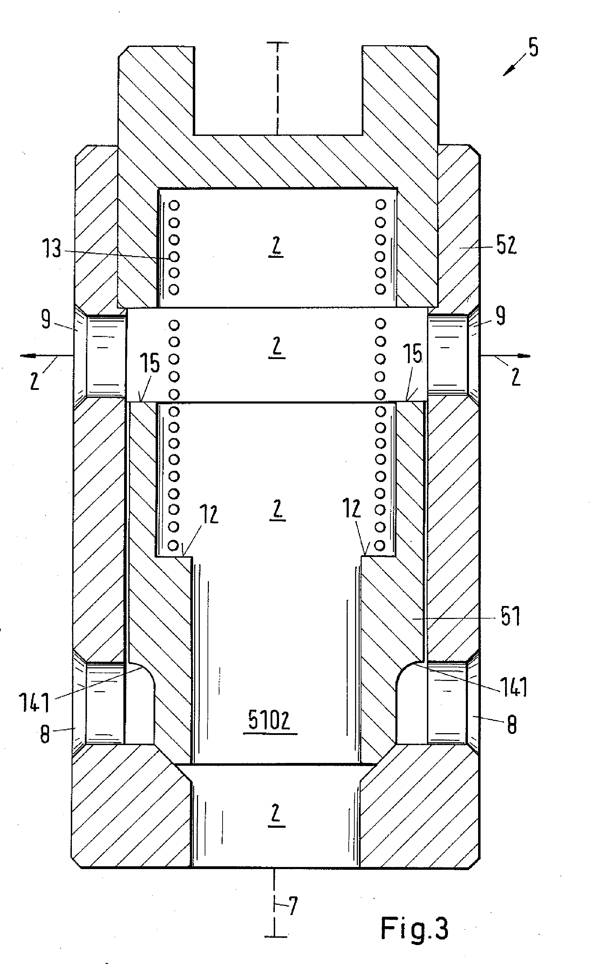

In Fig. 1 a cylinder oil dosage pump in accordance with the invention is illustrated schematically. The cylinder oil dosage pump 1 for dosing a pre-settable amount of a cylinder lubricating oil 2 to a lubricating quill of a cylinder of an internal combustion engine includes an actuating piston 3, a dosage plunger 4 being driven in the operation state by the actuating piston 3, and a delivery means 5 for delivering the lubricating oil 2 via a dosing space 6 to the lubricating quill provided at a cylinder wall of the cylinder of the combustion engine. In the dosing space 6 the dosage plunger 4 is drivable arranged so as to reciprocate in a delivery and a return stroke over a working travel along a plunger axis 7. The delivery means 5 is a hollow delivery means 5 of a two-part design. A first part of the delivery means 5 is a switching member 51 movably arranged within the delivery member 52 which is the second part of the delivery means 5. In the operation state, the switching member 51 reciprocates between a filling position 5101 and a delivery position 5102. The filling position 5101 is shown in Fig. 2 in greater detail and the delivery position 5102 in Fig. 3, respectively. In the filling position 5101 the dosing space 6 is refillable with lubrication oil 2 via the lubricating oil supply-opening 8 and in the delivery position 5102 the lubricating oil 2 is deliverable by means of the dosage plunger 4 via a quill-opening 9 to the lubricating quills which are not shown in Fig. 1.

A return spring 10 is provided at the actuating piston 3 in order to return the actuating piston 3 in the operating state back into the rest position 11 after a delivery stroke in which the lubricating oil is fed out of the dosing space 6 to the lubricating quills. Regarding Fig. 2 and Fig. 3 which show the delivery means 5 with the switching member 51 in the filling position 5101 and in the delivery position 5102, respectively, the delivery means 5 can be studied in greater detail.

As already mentioned, in the operating state the switching member 51 reciprocates between the filling position 5101 and the delivery position 5102. The working principle can be best described from a condition where the oil dosage pump 1 has finished injection and is about to start its return stroke. The return of the actuating piston 3 is facilitated by the return spring 10 as described above. During the return stroke of the actuating piston 3 the switching member 51 lifts against a spring force of the switching spring 13 due to the pressure which first acts only onto the outer-filling-face 141 of the filling-pressure-face 14, and after a certain lifting of the switching member 51, acts onto the entire effective area of the filling-pressure-face 14.

The lifting of the switching member 51 against the switching spring 13 opens the opening 8 and the switching member 51 will move along the plunger axis 7 until the delivery pressure face 15 is in direct contact with its counter-part-face 521 provided at the delivery member 52. This allows the cylinder lubricating oil 2 to fill in the dosing space 6 on top of the dosage plunger 4. The filling of the dosage space 6 continues till the actuating piston 3 has reached its rest position 11.

On receiving an injection signal from a remote control system which is not shown in the Figures, pressurized oil is supplied to the underside 31 of the actuating piston 3 and the actuating piston 3 starts to move along the plunger axis 7 out of the rest position 11 driving the attached dosage plunger 4 in the same direction.

The cylinder lubricating oil 2 pressurized by the dosage plunger 4 within the delivery means 5, acts in combination with the spring force of the switching spring 13 onto the spring-pressure-face 12.

The spring force of the switching-spring 13 is adjusted in such a way, that the force provided by the spring force 13 in combination with the force resulting from the pressure of the pressurized lubricating oil 2 acting onto the spring-pressure-face 12 and onto the delivery-pressure-face 15 is greater than the force resulting from the pressure of the pressurized lubricating oil 2 acting on the filling-pressure-face 14 when the switching member 51 moves from the filling position 5101 to the delivery position 5102.

In the delivery position 5102, the quill-openings 9 are opened and the lubricating oil 2 can be supplied through the quill-openings 9 out of the delivery means 5 through internal drillings for example to a common space from which the lubricating oil 2 passes e.g. to a distributor which can be mounted preferably close to the lubricating quills for even oil distribution.

When the amount of lubricating oil 2 provided in the dosing space 6 is released to the lubricating quills, the pressure in the delivery means 5 will drop and the lifting of the switching member 51 against the switching spring 13 will start again until the delivery pressure face 15 is in direct contact with its counter-part-face 521 provided at the delivery member 52.

## Claims

1. Cylinder oil dosage pump for dosing a pre-settable amount of a cylinder lubricating oil (2) to a lubricating quill of a cylinder of an internal combustion engine, in particular a two stroke large diesel engine, the cylinder oil dosage pump comprising an actuating piston (3), a dosage plunger (4), in particular only one single dosage plunger (4) being driven in the operation state by the actuating piston (3), and a delivery means (5) for delivering the lubricating oil (2) via a dosing space (6) to the lubricating quill, in which dosing space (6) the dosage plunger (4) is drivable arranged so as to reciprocate in a delivery and a return stroke over a working travel along a plunger axis (7), **characterized in that** the delivery means (5) is a hollow delivery means (5) of a two-part design, including a switching member (51) and a delivery member (52), the switching member (51) being movable arranged within the delivery member (52) so as to reciprocate between a filling position (5101)and a delivery position (5102), wherein in the filling position (5101) the dosing space (6) is refillable with lubrication oil (2) via a lubricating oil supply-opening (8) and in the delivery position (5102) the lubricating oil (2) is deliverable by means of the dosage plunger (4) via a quill-opening (9) to the lubricating quill.

2. Cylinder oil dosage pump in accordance with claim1, wherein at the actuating piston (3) a return spring (10) is provided in order to return the actuating piston (3) in the operating state after a delivery stroke back into a rest position (11).

3. Cylinder oil dosage pump in accordance with anyone of claims 1 or 2, wherein at a spring-pressure-face (12) of the switching member (51) a switching spring (13) is provided in order to return the switching member (51) in the operating state from the filling position (5101) back into the delivery position (5102).

4. Cylinder oil dosage pump in accordance with anyone of the preceding claims, wherein at the switching member (51) opposite to the spring-pressure-face (12) a filling-pressure-face (14) is provided, said filling-pressure-face (14) having an effective area which is greater than an area of the spring-pressure-face (12).

5. Cylinder oil dosage pump in accordance with anyone of the preceding claims, wherein at the switching member (51) opposite to the filling-pressure-face (14) a delivery-pressure-face (15) is provided.

6. Cylinder oil dosage pump in accordance with anyone of the preceding claims, wherein a total area of the spring-pressure-face (12) and the delivery-pressure-face (15) equals to the effective area of the filling-pressure face (14).

7. Cylinder oil dosage pump in accordance with anyone of the preceding claims, wherein a plurality, in particular four supply-openings (8) are provided.

8. Cylinder oil dosage pump in accordance with anyone of the preceding claims, wherein the supply-opening (8) is an annular space.

9. Cylinder oil dosage pump in accordance with anyone of the preceding claims, wherein a plurality, in particular four quill-openings (9) are provided.

10. Cylinder oil dosage pump in accordance with anyone of the preceding claims, wherein the quill-opening (8) is an annular space.

11. Cylinder lubricating arrangement comprising a cylinder oil dosage pump (1) in accordance with anyone of the preceding claims.

12. Cylinder lubricating arrangement in accordance with claim 11, wherein a pressurizeable oil supply is provided being connected to the supply opening (8) of the cylinder oil dosage pump (1).

13. Cylinder lubricating arrangement in accordance with anyone of claims 11 or 12, wherein the pressurizeable oil supply is a common rail accumulator.

14. Cylinder lubricating arrangement in accordance with anyone of claims 11 to 13, wherein the quill-opening (9) is connected to a common oil-space so that the lubricating oil (2) can be fed from the quill-opening (9) via the common oil-space to a oil distributor for even oil distribution of the lubricating quill of the cylinder of the internal combustion engine.

15. Internal combustion engine, in particular two-stroke large diesel engine comprising a cylinder oil dosage pump in accordance with anyone of claims 1 to 10 or comprising a cylinder lubricating arrangement in accordance with anyone of claims 11 to 14.
